# EUROPEAN PATENT APPLICATION

(11) **EP 4 807 833 A1**
(43) Date of publication of application: **16.09.2026**
(21) Application number: 25804969.1
(22) Date of filing: 13.06.2025
(51) Int. Cl.: H01M 10/04

(54) **STACKED BATTERY CELL PRODUCTION DEVICE AND USE METHOD THEREFOR**

(30) Priority: 23.01.2025 CN 202510112719; 23.01.2025 CN 202520163498 U
(71) Applicant: Eve Energy Co., Ltd., Huizhou, Guangdong 516006 (CN)
(72) Inventor: YUE, Mingqiang, Huizhou, Guangdong 516006 (CN); MA, Xifeng, Huizhou, Guangdong 516006 (CN); HU, Xiaolong, Huizhou, Guangdong 516006 (CN); GUAN, Lin, Huizhou, Guangdong 516006 (CN); PENG, Aicheng, Huizhou, Guangdong 516006 (CN); WANG, Shifeng, Huizhou, Guangdong 516006 (CN)
(74) Representative: Nederlandsch Octrooibureau
(86) International application number: PCT/CN2025/100828
(87) International publication number: WO 2026/157109

(57) **Abstract**

The present disclosure provides a laminated battery cell manufacturing apparatus and a method of operating the laminated battery cell manufacturing apparatus. The laminated battery cell manufacturing apparatus includes a negative electrode conveying mechanism (10), two unwinding rollers (20), two positive electrode conveying mechanisms (40), a first identification element (51), a second identification element (52), a cutter (70), a winding needle (80), and two first thermal bonding rollers (61). Each of the two unwinding rollers (20) is configured to unwind a corresponding separator (21) downstream of the unwinding roller. Each of the two unwinding rollers (20) is externally provided with a remaining amount detection element (30) configured to detect a length of the remaining separator (21) on the corresponding unwinding roller (20). The negative electrode conveying mechanism (10) is configured to intermittently convey a negative electrode plate (18) between the two separators (21). The remaining amount detection element (30) is in a communication connection with the negative electrode conveying mechanism (10). Each of the two positive electrode conveying mechanisms (40) is configured to place a positive electrode plate (48) at a side of the corresponding separator (21) away from the negative electrode plate (18). A first identification element (51) is disposed between the positive electrode conveying mechanism (40) and the unwinding roller (20). A material receiving member (90) is located downstream of the cutter (70). The material strip thermally bonded with the positive electrode plates (48) is stacked in the material receiving member (90).

## Description

This application claims priority to Chinese Patent Application No. 202510112719.2 filed with China National Intellectual Property Administration on January 23, 2025, and Chinese Patent Application No. 202520163498.7 filed with China National Intellectual Property Administration on January 23, 2025, the entire disclosure of which are incorporated herein by reference.

### FIELD

The present disclosure relates to the technical field of battery manufacturing, and specifically, to a laminated battery cell manufacturing apparatus and a method of operating the laminated battery cell manufacturing apparatus.

### BACKGROUND

A battery cell is manufactured in a stacking process. A negative electrode plate, a positive electrode plate, and a separator are core components. Through the stacking process, the positive electrode plate and the negative electrode plate in the battery cell are alternately stacked. Two adjacent electrode plates are separated from each other by the separator. During manufacturing, the separator serves as the base.

### Technical problems

Since a separator of 30 to 40 meters is required to manufacture one cell pack, a single roll of separator cannot exactly meet the requirement for manufacturing the last complete battery cell. During the manufacturing process, insufficient length of the remaining separator cannot be detected timely, and the manufacturing continues for a period of time before the insufficient length is identified. However, at this time, a plurality of positive electrode plates and a plurality of negative electrode plates have already been thermally bonded to the separator, causing these raw materials not to form a complete battery cell, thereby result in waste of raw materials of the positive electrode and negative electrode plates.

### SUMMARY

In a first aspect, embodiments of the present disclosure provide a laminated battery cell manufacturing apparatus. The laminated battery cell manufacturing apparatus includes a negative electrode conveying mechanism, two unwinding rollers, two positive electrode conveying mechanisms, a first identification element, two first thermal bonding rollers, a second identification element, a cutter and a winding needle, and a material receiving member. The two unwinding rollers are respectively located at two sides of the negative electrode conveying mechanism, and each of the two unwinding rollers is configured to unwind a corresponding separator downstream of the unwinding roller. Each of the two unwinding rollers is externally provided with a remaining amount detection element configured to detect a length of the remaining separator on the corresponding unwinding roller. The negative electrode conveying mechanism is configured to intermittently convey a negative electrode plate between two separators at variable intervals, and the negative electrode plate and the two separators form a material strip to be conveyed downstream. The remaining amount detection element is in a communication connection with the negative electrode conveying mechanism. The two positive electrode conveying mechanisms are located downstream of the two unwinding rollers in one-to-one correspondence. Each of the two positive electrode conveying mechanisms is configured to place a positive electrode plate at a side of the corresponding separator away from the negative electrode plate, and the positive electrode plates placed by the two positive electrode conveying mechanisms are alternately arranged. The first identification element is disposed between at least one of the two positive electrode conveying mechanisms and the corresponding unwinding roller. The first identification element is configured to identify a splicing site of the corresponding unwinding roller. The first identification element is in a communication connection with the negative electrode conveying mechanism and the at least one of the two positive electrode conveying mechanisms. The two first thermal bonding rollers are respectively located at two sides of the material strip and configured to heat the material strip. The second identification element is located downstream of the two first thermal bonding rollers and configured to identify a gap between two negative electrode plates. The cutter and the winding needle are located downstream of the second identification element. The cutter is in a communication connection with the second identification element and configured to cut the material strip. The winding needle is configured to clamp the material strip and rotate. The winding needle is movable with respect to the cutter to a position upstream or downstream of the cutter. The material receiving member is located downstream of the cutter. The material strip thermally bonded with the positive electrode plates is stacked in the material receiving member.

In a second aspect, embodiments of the present disclosure provide a method of operating a laminated battery cell manufacturing apparatus, and the method is applied in the laminated battery cell manufacturing apparatus as described above. The method includes: detecting, by the remaining amount detection element, the length of the remaining separator on the corresponding unwinding roller; determining whether the length of the remaining separator meets a use amount required for one battery cell; in response to determining that the length of the remaining separator meets the use amount required for one battery cell, manufacturing the battery cell normally, and returning to said detecting, by the remaining amount detection element, the length of the remaining separator on the corresponding unwinding roller; in response to determining that the length of the remaining separator fails to meet the use amount required for one battery cell, subsequent to conveying, by the negative electrode conveying mechanism, negative electrode plates sufficient for one battery cell and further conveying a further negative electrode plate at a second interval, stopping conveying of the negative electrode conveying mechanism and the two positive electrode conveying mechanisms; stopping the entire laminated battery cell manufacturing apparatus, and performing roll changing on the two unwinding rollers, in which a splicing site is formed between two rolls of separators of the same unwinding roller prior to and subsequent to the roll changing; rejecting a material strip segment from the further negative electrode plate spaced apart from a previous negative electrode plate by the second interval to the splicing site; and resuming battery cell manufacturing, and returning to perform said detecting, by the remaining amount detection element, the length of the remaining separator on the corresponding unwinding roller.

### Beneficial effects

The present disclosure provides a laminated battery cell manufacturing apparatus. The negative electrode plates are conveyed between the two separators by the negative electrode conveying mechanism. During normal manufacturing, when the negative electrode plates are conveyed by the negative electrode conveying mechanism, a spacing between two adjacent negative electrode plates is a first interval. The positive electrode plates are alternately placed by the two positive electrode conveying mechanisms at sides of the separator away from the negative electrode plate downstream. The material strips are thermally bonded by the first thermal bonding roller, and are stacked in the material receiving member to form the battery cell. When the remaining separator on the unwinding rollers (the separators on the two unwinding rollers are unwound synchronously, and the remaining amount of the separators is the same) is insufficient to manufacture one complete battery cell, the remaining amount detection element transmits a signal. At this time, the negative electrode conveying mechanism and the positive electrode conveying mechanisms continue to convey the negative electrode plate and positive electrode plates until the negative electrode conveying mechanism has conveyed the negative electrode plates required for one complete battery cell and has further conveyed a further negative electrode plate at the second interval from the previous negative electrode plate. Thereafter, the entire laminated battery cell manufacturing apparatus is stopped to perform splicing processing on the two unwinding rollers, and the separator splicer is formed at a splicing site between the old separator and the new separator. At this time, the unwinding rollers operate, and the negative electrode conveying mechanism and the positive electrode conveying mechanisms stop feeding. When the separator splicer passes through the first identification element, the first identification element transmits an instruction to allow the negative electrode conveying mechanism to start to convey the negative electrode plates. A first conveyed negative electrode plate is spaced apart from a second conveyed negative electrode plate at the second interval, and a plurality of subsequent adjacent negative electrode plates are arranged at the first interval. When the second interval downstream of the separator splicer passes through the second identification element, the winding needle clamps the material strip, the cutter cuts off the material strip at the second interval, and the winding needle moves to a position downstream of the cutter to start winding a rejection segment of the material strip. When the second interval upstream of the separator splicer passes through the second identification element, after a predetermined period, the cutter cuts off the material strip at the second interval, and the winding needle takes away the rejection segment. After the rejection segment is removed, the winding needle moves to a position upstream of the cutter again, and then stacking of a new battery cell is performed. Thus, the laminated battery cell manufacturing apparatus can detect the insufficient remaining separator in a timely manner, and then stop the entire apparatus to replace the separator, and reject the material strip segment with the separator splicer. As a result, overfeeding of both the negative electrode plates and the positive electrode plates onto the separator can be prevented, thereby avoiding waste of raw materials.

The present disclosure further provides a method of operating a laminated battery cell manufacturing apparatus. By providing the remaining amount detection element, an amount of the remaining separator on the unwinding roller is monitored at any time. When the amount of the remaining separator is insufficient for one battery cell, after conveyance of the positive electrode plates and negative electrode plates for the previous battery cell is completed, a further negative electrode plate is conveyed. During subsequent waste rejecting, this negative electrode plate serves as an identification mark for the waste rejecting. As a result, overfeeding of both the negative electrode plates and the positive electrode plates onto the separator can be prevented, thereby avoiding waste of raw materials.

### BRIEF DESCRIPTION OF THE DRAWINGS

FIG. 1 is a schematic structural view of a laminated battery cell manufacturing apparatus according to an embodiment of the present disclosure;
FIG. 2 is a schematic structural view of normal manufacturing and waste rejecting processes of a material strip according to an embodiment of the present disclosure;
FIG. 3 is a flowchart of a method of operating a laminated battery cell manufacturing apparatus according to an embodiment of the present disclosure;
FIG. 4 is a detailed step flowchart of step S60 according to an embodiment of the present disclosure;
FIG. 5 is a first state view of material strip manufacturing according to an embodiment of the present disclosure;
FIG. 6 is a second state view of material strip manufacturing according to an embodiment of the present disclosure;
FIG. 7 is a third state view of material strip manufacturing according to an embodiment of the present disclosure;
FIG. 8 is a fourth state view of material strip manufacturing according to an embodiment of the present disclosure;
FIG. 9 is a fifth state view of material strip manufacturing according to an embodiment of the present disclosure.

In the drawings:
10, negative electrode conveying mechanism; 11, negative electrode unwinding roller; 12, negative electrode strip; 13, negative electrode coding roller; 14, negative electrode scanning camera; 15, negative electrode cutting member; 16, first feeding roller; 17, first waste rejecting assembly; 171, first material blocking member; 172, first material collection member; 18, negative electrode plate;
20, unwinding roller; 21, separator; 211, second interval; 212, first interval; 213, waste rejecting range; 22, separator splicer;
30, remaining amount detection element;
40, positive electrode conveying mechanism; 41, positive electrode unwinding roller; 42, positive electrode strip; 43, positive electrode coding roller; 44, positive electrode scanning camera; 45, positive electrode cutting member; 46, second feeding roller; 47, second waste rejecting assembly; 471, second material blocking member; 472, second material collection member; 48, positive electrode plate;
51, first identification element; 52, second identification element;
61, first thermal bonding roller; 62, second thermal bonding roller; 63, first driving roller; 64, second driving roller;
70, cutter; 80, winding needle; 90, material receiving member; 200, stacking platform mechanism; 210, complete battery cell

### DETAILED DESCRIPTION

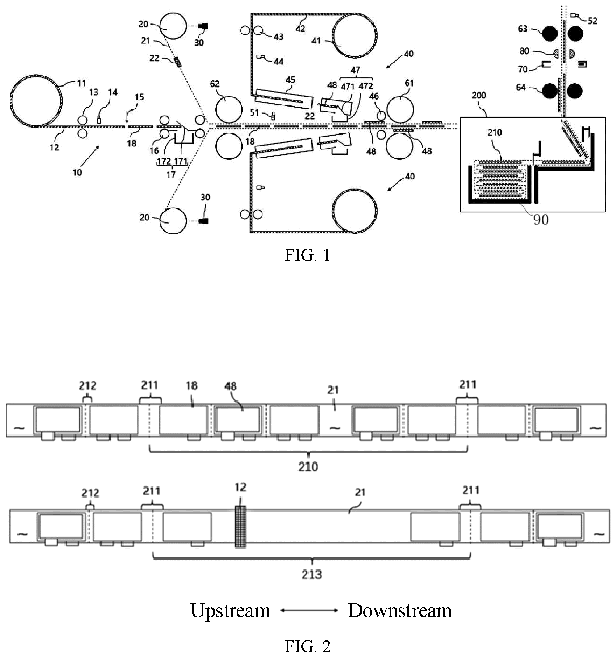

This embodiment provides a laminated battery cell manufacturing apparatus, which can timely detect that the remaining separator 21 is not sufficient to manufacture one complete battery cell 210, thereby preventing overfeeding of both the negative electrode plates 18 and the positive electrode plates 48 onto the separator 21, which can avoid waste of raw materials. As shown in FIG. 1, the laminated battery cell manufacturing apparatus includes a negative electrode conveying mechanism 10, two unwinding rollers 20, two positive electrode conveying mechanisms 40, a first identification element 51, a second identification element 52, a cutter 70, a winding needle 80, two first thermal bonding rollers 61, and a material receiving member 90. The two unwinding rollers 20 are respectively located at two sides of the negative electrode conveying mechanism 10. Each of the two unwinding rollers 20 is configured to unwind the separator 21 downstream of the unwinding roller 20. Each of the two unwinding rollers 20 is externally provided with a remaining amount detection element 30. The remaining amount detection element 30 is configured to detect a length of the remaining separator 21 on the unwinding roller 20. The negative electrode conveying mechanism 10 is configured to intermittently convey a negative electrode plate 18 between the two separators 21 at variable intervals. The negative electrode plate 18 and the two separators 21 form a material strip to be conveyed downstream. The remaining amount detection element 30 is in a communication connection with the negative electrode conveying mechanism 10. The two positive electrode conveying mechanisms 40 are located downstream of the two unwinding rollers 20 in one-to-one correspondence. Each of the two positive electrode conveying mechanisms 40 is configured to place a positive electrode plate 48 at a side of the corresponding separator 21 away from the negative electrode plate 18. The positive electrode plates 48 placed by the two positive electrode conveying mechanisms 40 are alternately arranged. The first identification element 51 is disposed between at least one of the two positive electrode conveying mechanisms 40 and the corresponding unwinding roller 20. The first identification element 51 is configured to identify a splicing site of the corresponding unwinding roller 20 and be in a communication connection with the negative electrode conveying mechanism 10 and the at least one of the two positive electrode conveying mechanisms 40. The two first thermal bonding rollers 61 are respectively located at two sides of the material strip and configured to heat the material strip. The second identification element 52 is located downstream of the two first thermal bonding rollers 61 and configured to identify a gap between two negative electrode plates 18. The cutter 70 and the winding needle 80 are located downstream of the second identification element 52. The cutter 70 is in a communication connection with the second identification element 52 and configured to cut the material strip. The winding needle 80 is configured to clamp the material strip and rotate. Further, the winding needle 80 is movable with respect to the cutter 70 to a position upstream or downstream of the cutter 70. The material receiving member 90 is located downstream of the cutter 70. The material strips thermally bonded with the positive electrode plates 48 are stacked in the material receiving member 90.

For the above laminated battery cell manufacturing apparatus, as shown in FIG. 2, the negative electrode plates 18 are conveyed between the two separators 21 by the negative electrode conveying mechanism 10. During normal manufacturing, when the negative electrode plates 18 are conveyed by the negative electrode conveying mechanism 10, a spacing between two adjacent negative electrode plates 18 is a first interval 212. The positive electrode plates 48 are alternately placed by the two positive electrode conveying mechanisms 40 at the sides of each separator 21 away from the negative electrode plate 18 downstream. The material strips are thermally bonded by the first thermal bonding roller 61, and are stacked in the material receiving member 90 to form the battery cell. When the remaining separator 21 on the unwinding rollers 20 (the separators 21 on the two unwinding rollers 20 are unwound synchronously, and the amounts of the remaining separators 21 are the same) is insufficient to manufacture one complete battery cell, the remaining amount detection element 30 transmits a signal. At this time, the negative electrode conveying mechanism 10 and the positive electrode conveying mechanisms 40 continue to convey the negative electrode plate 18 and positive electrode plates 48 until the negative electrode conveying mechanism 10 has conveyed the negative electrode plates 18 required for one complete battery cell and has further conveyed a further negative electrode plate 18 at the second interval 211 from the previous negative electrode plate 18. Thereafter, the entire laminated battery cell manufacturing apparatus is stopped to perform splicing processing on the two unwinding rollers 20, and the separator splicer 22 is formed at a splicing site between the old separator 21 and the new separator 21. At this time, the unwinding rollers 20 operate, and the negative electrode conveying mechanism 10 and the positive electrode conveying mechanisms 40 stop feeding the electrode plates. When the separator splicer 22 passes through the first identification element 51, the first identification element 51 transmits an instruction to allow the negative electrode conveying mechanism 10 to start to convey the negative electrode plates 18. A first conveyed negative electrode plate 18 is spaced apart from a second conveyed negative electrode plate 18 at the second interval 211, and a plurality of subsequent adjacent negative electrode plates 18 are arranged at the first interval 212. When the second interval 211 downstream of the separator splicer 22 passes through the second identification element 52, the winding needle 80 clamps the material strip, the cutter 70 cuts off the material strip at the second interval 211, and the winding needle 80 moves to a position downstream of the cutter 70 to start winding a rejection segment 213 of the material strip. When the second interval 211 upstream of the separator splicer 22 passes through the second identification element 52, after a predetermined period, the cutter 70 cuts off the material strip at the second interval 211, and the winding needle 80 takes away the rejection segment 213. After the rejection segment 213 is removed, the winding needle 80 moves to a position upstream of the cutter 70 again, and then stacking of a new battery cell is performed. Thus, the laminated battery cell manufacturing apparatus can detect the insufficient remaining separator in a timely manner, and then stop the entire apparatus to replace the separator 21, and reject the material strip segment with the separator splicer 22. As a result, overfeeding of both the negative electrode plate 18 and the positive electrode plates 48 onto the separator 21 can be prevented, thereby avoiding waste of raw materials.

In some embodiments, the remaining amount detection element 30 may determine an amount of the remaining separator 21 by detecting a thickness of the separator 21 on the unwinding roller 20. In other embodiments, the remaining amount detection element 30 may also obtain the amount of the remaining separator 21 through other means, which are not limited herein.

In some embodiments, among a plurality of negative electrode plates 18 in the same battery cell, a spacing between adjacent negative electrode plates 18 is X1 (i.e., the first interval 212), and a spacing between the last negative electrode plate 18 of the previous battery cell and the first negative electrode plate 18 of the next battery cell is X2 (i.e., the second interval 211), where X2>X1. Since the spacing between two adjacent negative electrode plates 18 in one battery cell is already sufficiently small, setting X2>X1 is easier for the second identification element 52 to perform identifying.

In some embodiments, the first identification element 51 is a color mark sensor, and the separator splicer 22 has a different color from the separator 21. Through this arrangement, the first identification element 51 may easily identify the separator splicer 22 only by setting the color of the separator splicer 22 to be different from that of the separator 21.

In some embodiments, as shown in FIG. 1, the negative electrode conveying mechanism 10 includes a negative electrode unwinding roller 11, a negative electrode coding roller 13, a negative electrode scanning camera 14, a negative electrode cutting member 15, a first feeding roller 16, and a first waste rejecting assembly 17. The negative electrode unwinding roller 11 is configured to unwind a continuous negative electrode strip 12. The negative electrode coding roller 13 is located downstream of the negative electrode unwinding roller 11 and configured to print a negative electrode code on the negative electrode strip 12. The negative electrode scanning camera 14 is located downstream of the negative electrode coding roller 13 and configured to identify the negative electrode code and a defect of the negative electrode strip 12. The negative electrode cutting member 15 is located downstream of the negative electrode scanning camera 14 and configured to cut the continuous negative electrode strip 12 into individual negative electrode plates 18. The first feeding roller 16 is located downstream of the negative electrode cutting member 15 and configured to sequentially convey the negative electrode plates 18 downstream of the first feeding roller 16. The first waste rejecting assembly 17 is located downstream of the first feeding roller 16. The first waste rejecting assembly 17 includes a first material blocking member 171 and a first material collection member 172. The first material blocking member 171 is in a communication connection with the negative electrode scanning camera 14 and capable of switching between a first position and a second position. The first material blocking member 171 is configured to allow the negative electrode plates 18 to enter and be conveyed between the two separators 21 when being in the first position, and to block the negative electrode plates 18 and force the negative electrode plates 18 into the first material collection member 172 when being in the second position. Through the above arrangement, the negative electrode coding roller 13 can count the number of outputted negative electrode plates 18. For example, it is necessary for the negative electrode conveying mechanism 10 to output N negative electrode plates 18 for one battery cell, and the number N is counted by the negative electrode coding roller 13. When there is a defect, the corresponding negative electrode plate 18 enters the first material blocking member 171, and thus it is prevented from flowing downstream. As a result, defective negative electrode plate 18 can be prevented from being made into the battery cell, which would otherwise affect battery cell performance. When counting, the negative electrode coding roller 13 excludes the number of negative electrode plates 18 entering the first material blocking member 171, ensuring that the number of negative electrode plates 18 finally outputted by the negative electrode conveying mechanism 10 to the downstream for manufacturing the battery cell is correct.

It should be noted that the negative electrode cutting member 15 only schematically shows a cutting position. This structure is a related art, and details thereof are omitted herein.

In some embodiments, the first waste rejecting assembly 17 further includes a first frame (not shown) and a first rotation driving member (not shown) mounted at the first frame. The first material blocking member 171 is of a plate-like shape and connected to an output end of the first rotation driving member. The first rotation driving member is capable of driving the first material blocking member 171 to rotate and switch between the first position and the second position. Through the above arrangement, the first rotation driving member can drive the first material blocking member 171 to rotate, to realize the switching of the first material blocking member 171 between the first position and the second position. The first rotation driving member may be a servo motor.

In some embodiments, each of the two positive electrode conveying mechanisms 40 includes a positive electrode unwinding roller 41, a positive electrode coding roller 43, a positive electrode scanning camera 44, a positive electrode cutting member 45, a second feeding roller 46, and a second waste rejecting assembly 47. The positive electrode unwinding roller 41 is configured to unwind a continuous positive electrode strip 42. The positive electrode coding roller 43 is located downstream of the positive electrode unwinding roller 41 and configured to print a positive electrode code on the positive electrode strip 42. The positive electrode scanning camera 44 is located downstream of the positive electrode coding roller 43 and configured to identify the positive electrode code and a defect of the positive electrode strip 42. The positive electrode cutting member 45 is located downstream of the positive electrode scanning camera 44 and configured to cut the continuous positive electrode strip 42 into individual positive electrode plates 48. The second feeding roller 46 is located downstream of the positive electrode cutting member 45 and configured to sequentially convey the positive electrode plates 48 downstream of the second feeding roller 46. The second waste rejecting assembly 47 is located downstream of the second feeding roller 46. The second waste rejecting assembly 47 includes a second material blocking member 471 and a second material collection member 472. The second material blocking member 471 is in a communication connection with the positive electrode scanning camera 44 and capable of switching between a third position and a fourth position. The second material blocking member 471 is configured to allow the positive electrode plates 48 to be placed on the separator 21 when being in the third position, and to block the positive electrode plates 48 and force the positive electrode plates 48 into the second material collection member 472 when being in the fourth position. Through the above arrangement, the positive electrode coding roller 43 can count the number of outputted positive electrode plates 48. For example, it is necessary for the positive electrode conveying mechanism 40 to output M positive electrode plates 48 for one battery cell, and the number M is counted by the positive electrode coding roller 43. When there is a defect, the corresponding positive electrode plate 48 enters the second material blocking member 471, and thus it is prevented from flowing downstream. As a result, defective positive electrode plates 48 can be prevented from being made into the battery cell, which would otherwise affect the battery cell performance. When counting, the positive electrode coding roller 43 excludes the number of positive electrode plates 48 entering the second material blocking member 471, ensuring that the number of positive electrode plates 48 finally outputted by the positive electrode conveying mechanism 40 to the downstream for manufacturing the battery cell is correct.

In some embodiments, the second waste rejecting assembly 47 further includes a second frame and a second rotation driving member mounted at the second frame. The second material blocking member 471 is of a plate-like shape and connected to an output end of the second rotation driving member. The second rotation driving member is capable of driving the second material blocking member 471 to rotate and switch between the third position and the fourth position. Through the above arrangement, the second rotation driving member can drive the second material blocking member 471 to rotate, to realize the switching of the second material blocking member 471 between the third position and the fourth position. The second rotation driving member may be a servo motor.

In some embodiments, as shown in FIG. 1, two second thermal bonding rollers 62 are disposed upstream of the two positive electrode conveying mechanisms 40. The two second thermal bonding rollers 62 are configured to thermally bond the two separators 21 with each negative electrode plate 18. Through the above arrangement, the two separators 21 and the negative electrode plate 18 located between the two separators 21 are thermally bonded by the second thermal bonding rollers 62. Then, as the material strip moves downstream, the first thermal bonding roller 61 performs thermal bonding again on a further layer of positive electrode plates 48. Thus, each material strip is fully thermally bonded, preventing insufficient thermal bonding of the material strips by only one thermal bonding roller.

In some embodiments, a first driving roller 63 is disposed upstream of the cutter 70, and a second driving roller 64 is disposed downstream of the cutter 70. The winding needle 80 is capable of staying between the cutter 70 and the first driving roller 63 or between the cutter 70 and the second driving roller 64. Through the above arrangement, the two driving rollers can provide a driving force for the material strip, avoiding slipping of the material strip during operation. Meanwhile, the first driving roller 63 is disposed ahead of the cutter 70 to ensure that the material strip is in a taut state for easy cutting when the cutter 70 cuts off the material strip. The second driving roller 64 is disposed ahead of the material receiving member 90 to ensure smooth movement of the material strip into the material receiving member 90.

The battery cell in the material receiving member 90 is formed by stacking the material strips through a stacking platform mechanism 200, which is a related art and details thereof are omitted herein.

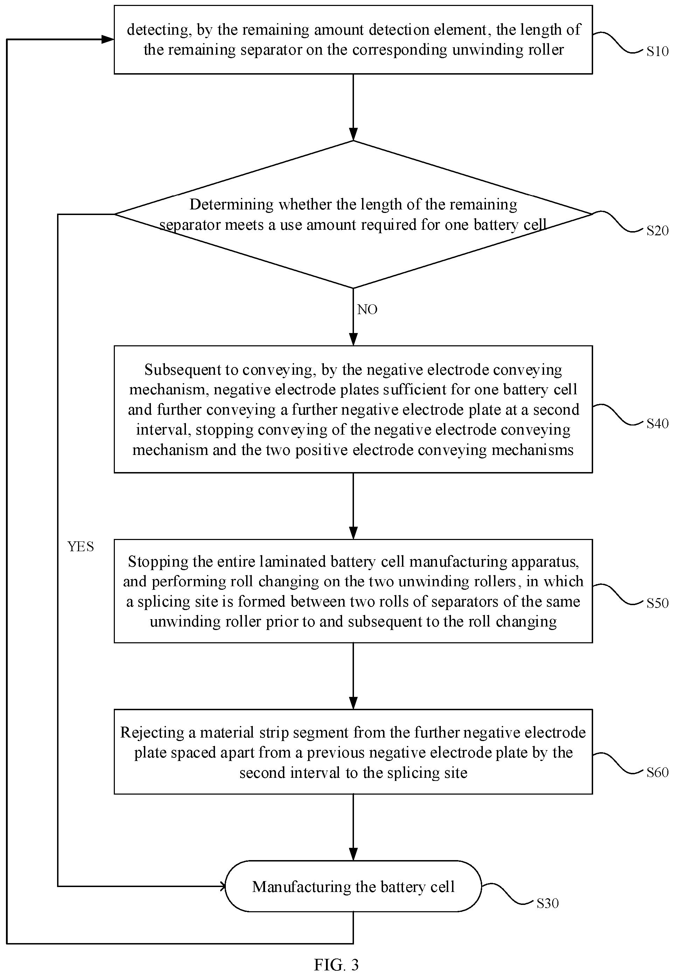

Embodiments of the present disclosure further provide a method of operating a laminated battery cell manufacturing apparatus, and the method is applied in the laminated battery cell manufacturing apparatus as described above. As shown in FIG. 3, the method of operating the laminated battery cell manufacturing apparatus includes operations at steps S10 to S70.

At step S10, the length of the remaining separator 21 on the corresponding unwinding roller 20 is detected by the remaining amount detection element 30.

At step S20, it is determined whether the length of the remaining separator 21 meets a use amount required for one battery cell. In response to determining that the length of the remaining separator 21 meets the use amount required for one battery cell, step S30 is performed. In response to determining that the length of the remaining separator 21 fails to meet the use amount required for one battery cell, step S40 is performed.

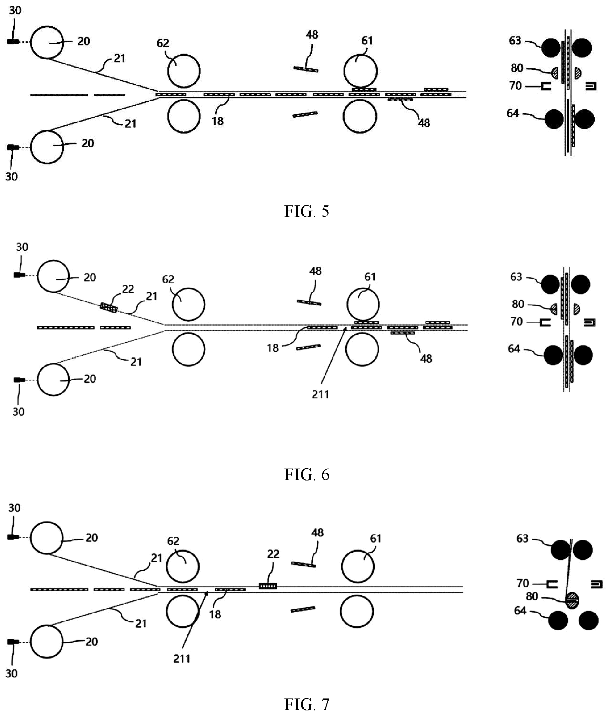

At step S30, the battery cell is manufactured normally, and the process returns to step S10. A state of the entire laminated battery cell manufacturing apparatus is shown in FIG. 5.

At step S40, subsequent to conveying, by the negative electrode conveying mechanism 10, negative electrode plates 18 sufficient for one battery cell and further conveying a further negative electrode plate 18 at a second interval 211, conveying of the negative electrode conveying mechanism 10 and the two positive electrode conveying mechanisms 40 is stopped.

At step S50, the entire apparatus is stopped, and roll changing is performed on the two unwinding rollers 20. A splicing site is formed between two rolls of separators 21 prior to and subsequent to the roll changing. The processes of steps S40 and S50 are shown in FIG. 6.

At step S60, a material strip segment from the further negative electrode plate 18 spaced apart from a previous negative electrode plate 18 by the second interval 211 to the splicing site is rejected.

At step S70, battery cell manufacturing is resumed, and the process returns to step S10.

For the above method of operating the laminated battery cell manufacturing apparatus, by providing the remaining amount detection element 30, an amount of the remaining separator 21 on the unwinding roller 20 is monitored at any time. When the amount of the remaining separator is insufficient for one battery cell, after conveyance of the positive electrode plates 48 and negative electrode plates 18 for the previous battery cell is completed, a further negative electrode plate 18 is conveyed. During subsequent waste rejecting, the negative electrode plate 18 serves as an identification mark for the waste rejecting. As a result, overfeeding of both the negative electrode plates 18 and the positive electrode plates 48 onto the separator 21 can be prevented, thereby avoiding waste of raw materials.

In some embodiments, at step S30, the normal manufacturing of the battery cell means that the negative electrode conveying mechanism 10 conveys the negative electrode plates 18 between the two separators 21 at the second interval 211, and then conveys a plurality of negative electrode plates 18 at the first interval 212. The two positive electrode conveying mechanisms 40 alternately place the positive electrode plates 48 on the material strip, and the material strips are stacked in the material receiving member 90.

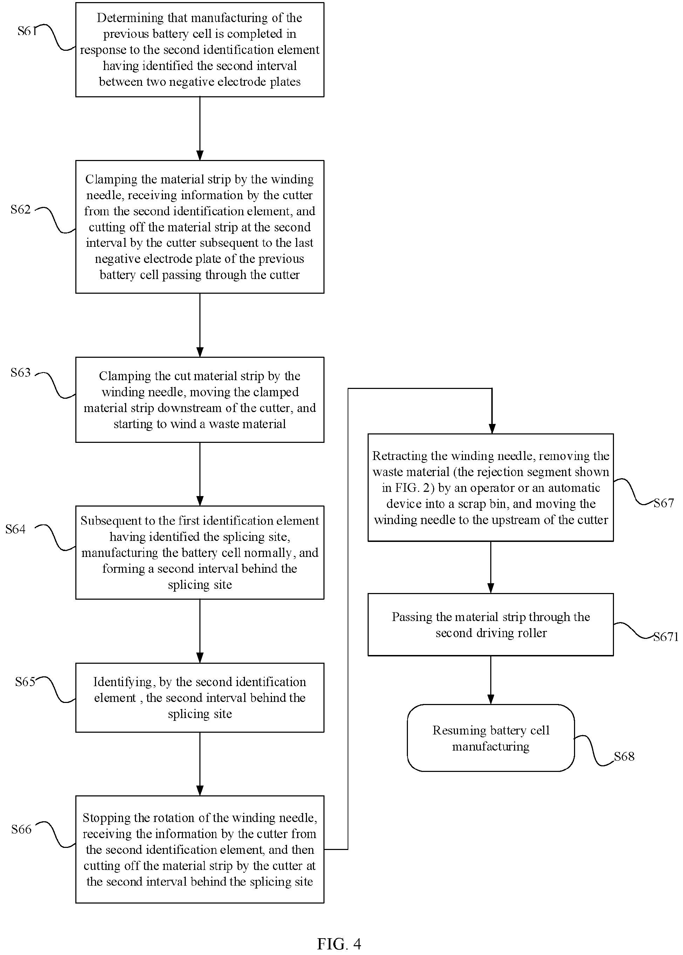

As shown in FIG. 4, step S60 includes operations at steps S61 to S68.

At step S61, it is determined that manufacturing of the previous battery cell is completed in response to the second identification element 52 having identified the second interval 211 between two negative electrode plates 18.

At step S62, the material strip is clamped by the winding needle 80, information from the second identification element 52 is received by the cutter 70, and subsequent to the last negative electrode plate 18 of the previous battery cell passing through the cutter 70, the material strip is cut off by the cutter 70 at the second interval 211.

At step S63, the cut material strip is clamped by the winding needle 80, the clamped material strip is moved to the downstream of the cutter 70, and winding of the waste material is initiated.

At step S64, subsequent to the first identification element 51 having identified the splicing site, the battery cell is manufactured normally, and a second interval is formed behind the splicing site. (Steps S61 to S66 are shown in FIG. 7).

At step S65, the second interval 211 behind the splicing site is identified by the second identification element 52.

At step S66, the winding needle 80 stops rotating, and the cutter 70 receives the information from the second identification element 52 and cuts off the material strip at the second interval 211 behind the splicing site.

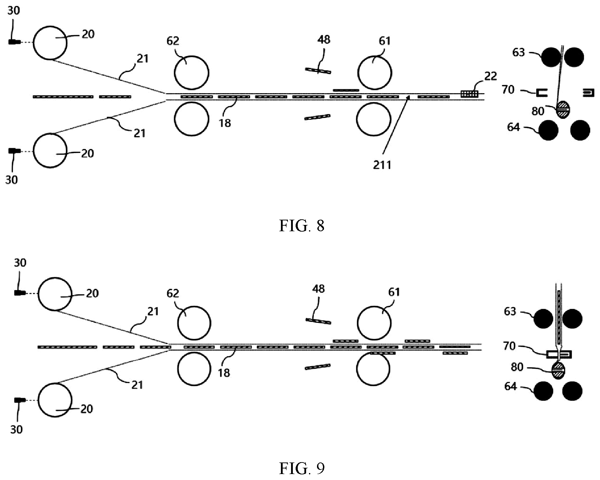

At step S67, the winding needle 80 is retracted, the waste material (a rejection segment 213 of the material strip in FIG.2) is removed by an operator or an automatic device into a scrap bin, and the winding needle 80 is moved to the upstream of the cutter 70. (Steps S65 to S67 are shown in FIG. 9).

At step S68, battery cell manufacturing is resumed.

Through the above arrangement, the second identification element 52 is responsible for identifying the second interval 211 and instructing the cutter 70 and the winding needle 80 to operate. During the waste rejecting process, through the second interval 211 established by the negative electrode conveying mechanism 10, a start position and an end position of the rejection segment 213 can be accurately identified. The cutter 70 is instructed to cut off the material strip at the rejection segment 213, and the winding needle 80 collects the rejection segment 213. Compared with wasting a large number of negative electrode plates 18 and positive electrode plates 48, the rejection segment 213 only contains two negative electrode plates 18, which greatly reduces the waste of raw material. Meanwhile, the first identification element 51 can identify the separator splicer 22, and serve as an instruction for the negative electrode conveying mechanism 10 and the positive electrode conveying mechanisms 40 to subsequently restart normal manufacturing of the battery cell, ensuring a compact manufacturing cycle. In addition, the cooperation of the second identification element 52 and the second interval 211 can also distinguish the previous battery cell from the next battery cell during the normal manufacturing of the battery cell, improving manufacturing automation.

It should be noted that after the second identification element 52 has identified the second interval 211, a predetermined time and distance required for the second interval 211 to reach the cutter 70 is automatically determined by a background system. In addition, between steps S67 and S68, step S60 further includes a step S671 of passing the material strip through the second driving roller 64 to drive the material strip to continue moving downstream.

Optionally, the second identification element 52 is a Charge Coupled Device (CCD) camera.

## Claims

1. A laminated battery cell manufacturing apparatus, comprising:
a negative electrode conveying mechanism (10);
two unwinding rollers (20) respectively located at two sides of the negative electrode conveying mechanism (10), wherein each of the two unwinding rollers (20) is configured to unwind a corresponding separator (21) downstream of the unwinding roller (20), wherein each of the two unwinding rollers (20) is externally provided with a remaining amount detection element (30) configured to detect a length of the remaining separator (21) on the corresponding unwinding roller (20), and wherein the negative electrode conveying mechanism (10) is configured to intermittently convey a negative electrode plate (18) between two separators (21) at variable intervals, the negative electrode plate (18) and the two separators (21) forming a material strip to be conveyed downstream, the remaining amount detection element (30) being in a communication connection with the negative electrode conveying mechanism (10);
two positive electrode conveying mechanisms (40) located downstream of the two unwinding rollers (20) in one-to-one correspondence, wherein each of the two positive electrode conveying mechanisms (40) is configured to place a positive electrode plate (48) at a side of the corresponding separator (21) away from the negative electrode plate (18), and wherein the positive electrode plates (48) placed by the two positive electrode conveying mechanisms (40) are alternately arranged;
a first identification element (51) disposed between at least one of the two positive electrode conveying mechanisms (40) and the corresponding unwinding roller (20), wherein the first identification element (51) is configured to identify a splicing site of the corresponding unwinding roller (20), and wherein the first identification element (51) is in a communication connection with the negative electrode conveying mechanism (10) and the at least one of the two positive electrode conveying mechanisms (40);
two first thermal bonding rollers (61) respectively located at two sides of the material strip and configured to heat the material strip;
a second identification element (52) located downstream of the two first thermal bonding rollers (61) and configured to identify a gap between two negative electrode plates (18);
a cutter (70) and a winding needle (80) that are located downstream of the second identification element (52), wherein the cutter (70) is in a communication connection with the second identification element (52) and configured to cut the material strip, wherein the winding needle (80) is configured to clamp the material strip and rotate, and wherein the winding needle (80) is movable with respect to the cutter (70) to a position upstream or downstream of the cutter (70); and
a material receiving member (90) located downstream of the cutter (70), wherein the material strip thermally bonded with the positive electrode plates (48) is stacked in the material receiving member (90).

2. The laminated battery cell manufacturing apparatus according to claim 1, wherein:
the first identification element (51) is a color mark sensor; and
two rolls of separators (21) on the same unwinding roller (20) are spliced by a separator splicer (22), the separator splicer (22) having a different color from the two rolls of separators (21).

3. The laminated battery cell manufacturing apparatus according to claim 1, wherein the negative electrode conveying mechanism (10) comprises:
a negative electrode unwinding roller (11) configured to unwind a continuous negative electrode strip (12);
a negative electrode coding roller (13) located downstream of the negative electrode unwinding roller (11) and configured to print a negative electrode code on the negative electrode strip (12);
a negative electrode scanning camera (14) located downstream of the negative electrode coding roller (13) and configured to identify the negative electrode code and a defect of the negative electrode strip (12);
a negative electrode cutting member (15) located downstream of the negative electrode scanning camera (14) and configured to cut the continuous negative electrode strip (12) into individual negative electrode plates (18);
a first feeding roller (16) located downstream of the negative electrode cutting member (15) and configured to sequentially convey the negative electrode plates (18) downstream of the first feeding roller (16); and
a first waste rejecting assembly (17) located downstream of the first feeding roller (16), the first waste rejecting assembly (17) comprising a first material blocking member (171) and a first material collection member (172), wherein the first material blocking member (171) is in a communication connection with the negative electrode scanning camera (14) and capable of switching between a first position and a second position, and wherein the first material blocking member (171) is configured to allow the negative electrode plates (18) to enter and be conveyed between the two separators (21) when being in the first position, and to block the negative electrode plates (18) and force the negative electrode plates (18) into the first material collection member (172) when being in the second position.

4. The laminated battery cell manufacturing apparatus according to claim 3, wherein the first waste rejecting assembly (17) further comprises a first frame and a first rotation driving member mounted at the first frame, wherein:
the first material blocking member (171) is of a plate-like shape and connected to an output end of the first rotation driving member; and
the first rotation driving member is capable of driving the first material blocking member (171) to rotate and switch between the first position and the second position.

5. The laminated battery cell manufacturing apparatus according to claim 1, wherein each of the two positive electrode conveying mechanisms (40) comprises:
a positive electrode unwinding roller (41) configured to unwind a continuous positive electrode strip (42);
a positive electrode coding roller (43) located downstream of the positive electrode unwinding roller (41) and configured to print a positive electrode code on the positive electrode strip (42);
a positive electrode scanning camera (44) located downstream of the positive electrode coding roller (43) and configured to identify the positive electrode code and a defect of the positive electrode strip (42);
a positive electrode cutting member (45) located downstream of the positive electrode scanning camera (44) and configured to cut a continuous positive electrode strip (42) into individual positive electrode plates (48);
a second feeding roller (46) located downstream of the positive electrode cutting member (45) and configured to sequentially convey the positive electrode plates (48) downstream of the second feeding roller (46); and
a second waste rejecting assembly (47) located downstream of the second feeding roller (46), the second waste rejecting assembly (47) comprising a second material blocking member (471) and a second material collection member (472), wherein the second material blocking member (471) is in a communication connection with the positive electrode scanning camera (44) and capable of switching between a third position and a fourth position, and wherein the second material blocking member (471) is configured to allow the positive electrode plate (48) to be placed on the separator (21) when being in the third position, and to block the positive electrode plate (48) and force the positive electrode plate (48) into the second material collection member (472) when being in the fourth position.

6. The laminated battery cell manufacturing apparatus according to claim 5, wherein:
the second waste rejecting assembly (47) further comprises a second frame and a second rotation driving member mounted at the second frame, wherein:
the second material blocking member (471) is of a plate-like shape and connected to an output end of the second rotation driving member; and
the second rotation driving member is capable of driving the second material blocking member (471) to rotate and switch between the third position and the fourth position.

7. The laminated battery cell manufacturing apparatus according to any one of claims 1 to 6, wherein two second thermal bonding rollers (62) are disposed upstream of the two positive electrode conveying mechanisms (40), the two second thermal bonding rollers (62) being configured to thermally bond the two separators (21) with each negative electrode plate (18).

8. The laminated battery cell manufacturing apparatus according to any one of claims 1 to 6, wherein a first driving roller (63) is disposed upstream of the cutter (70), and wherein a second driving roller (64) is disposed downstream of the cutter (70),
wherein the winding needle (80) is capable of staying between the cutter (70) and the first driving roller (63) or between the cutter (70) and the second driving roller (64).

9. A method of operating a laminated battery cell manufacturing apparatus, the method being applied in the laminated battery cell manufacturing apparatus according to any one of claims 1 to 8, wherein the method comprises:
detecting, by the remaining amount detection element (30), the length of the remaining separator (21) on the corresponding unwinding roller (20);
determining whether the length of the remaining separator (21) meets a use amount required for one battery cell;
in response to determining that the length of the remaining separator (21) meets the use amount required for one battery cell, manufacturing the battery cell normally, and returning to said detecting, by the remaining amount detection element (30), the length of the remaining separator (21) on the corresponding unwinding roller (20);
in response to determining that the length of the remaining separator (21) fails to meet the use amount required for one battery cell, subsequent to conveying, by the negative electrode conveying mechanism (10), negative electrode plates (18) sufficient for one battery cell and further conveying a further negative electrode plate (18) at a second interval (211), stopping conveying of the negative electrode conveying mechanism (10) and the two positive electrode conveying mechanisms (40);
stopping the entire laminated battery cell manufacturing apparatus, and performing roll changing on the two unwinding rollers (20), wherein a splicing site is formed between two rolls of separators (21) of the same unwinding roller (20) prior to and subsequent to the roll changing;
rejecting a material strip segment from the further negative electrode plate (18) spaced apart from a previous negative electrode plate (18) by the second interval (211) to the splicing site; and
resuming battery cell manufacturing, and returning to perform said detecting, by the remaining amount detection element (30), the length of the remaining separator (21) on the corresponding unwinding roller (20).

10. The method according to claim 9, wherein said rejecting the material strip segment from the further negative electrode plate (18) spaced apart from the previous negative electrode plate (18) by the second interval (211) to the splicing site comprises:
determining that manufacturing of the previous battery cell is completed in response to the second identification element (52) having identified the second interval (211) between two negative electrode plates (18);
clamping the material strip by the winding needle (80), receiving information by the cutter (70) from the second identification element (52), and cutting off the material strip at the second interval (211) by the cutter (70) subsequent to the last negative electrode plate (18) of the previous battery cell passing through the cutter (70);
clamping the cut material strip by the winding needle (80), moving the clamped material strip downstream of the cutter (70), and starting to wind a waste material;
subsequent to the first identification element (51) having identified the splicing site, manufacturing the battery cell normally, and forming a second interval (211) behind the splicing site;
identifying, by the second identification element (52), the second interval (211) behind the splicing site;
receiving the information by the cutter (70) from the second identification element (52) and then cutting off the material strip by the cutter (70) at the second interval (211) behind the splicing site; and
retracting the winding needle (80), removing the waste material by an operator, and moving the winding needle (80) upstream of the cutter (70).
